# EUROPEAN PATENT APPLICATION

(11) **EP 4 671 860 A1**
(43) Date of publication of application: **31.12.2025**
(21) Application number: 24184454.7
(22) Date of filing: 25.06.2024
(51) Int. Cl.: G02F 1/365, G02F 1/21, G02F 3/00, G06E 3/00, G02F 1/313

(54) **OPTICAL PROCESSOR WITH TIME-SPACE-MULTIPLEXING DESIGN**

(71) Applicant: Q.ant GmbH, 70565 Stuttgart (DE)
(72) Inventor: Chen, Xing, 71634 Ludwigsburg (DE); Wintermantel, Tobias, 72760 Reutlingen (DE)
(74) Representative: DREISS Patentanwälte PartG mbB

(57) **Abstract**

The invention relates to an optical processor (2), in particular to an optical interferometer, comprising: a plurality of processor input ports (5.1 to 5.4) for receiving input optical signals (4.1 to 4.4), a plurality of processor output ports (6.1 to 6.4) for emitting output optical signals (7.1 to 7.4), and an optical network (9) that connects the processor input ports (5.1 to 5.4) to the processor output ports (6.1 to 6.4) and comprises at least one layer (11) with a plurality of optical devices (10a-c) configured to process the input optical signals (4.1 to 4.4) from the processor input ports (5.1 to 5.4). The at least one layer (11) has a plurality of input ports (14.1 to 14.4) and a plurality of output ports (15.1 to 15.4) that are connected to the plurality of input ports (14.1 to 14.4) via optical delay lines (16.1 to 16.4). The invention also relates to an apparatus (1), comprising: an optical processor (2) as indicated above, a plurality of light sources (3.1 to 3.4) for generating the plurality of input optical signals (4.1 to 4.4) for the optical processor (2), and a plurality of optical detectors (8.1 to 8.4) for detecting the output optical signals (7.1 to 7.4) from the optical processor (2).

## Description

The present invention relates to an optical processor, in particular to an optical interferometer, comprising: a plurality of processor input ports for receiving input optical signals, a plurality of processor output ports for emitting output optical signals, and an optical network that connects the processor input ports to the processor output ports and comprises at least one layer with a plurality of optical devices configured to process the input optical signals from the processor input ports.

Optical interferometers, e.g. universal or non-universal interferometers are commonly used in photonic chips or photonic processors. In particular, when processing a larger number of optical modes, these interferometers require a large number of optical operations to be performed, which requires the implementation of numerous hardware structures. However, the number of hardware structures that can be realized is often limited due to factors such as the fabrication success fidelities or the available size on the wafer.

US 11,454,862 B2 discloses an apparatus and methods for spatio-temporal implementation of arbitrary unitary transformations on optical modes. The apparatus includes a plurality of interconnected reconfigurable beam splitters and a plurality of phase shifters collectively configured to define a network of optical devices that is configured to perform a unitary transformation on a plurality of input optical signals via a triangular architecture. The apparatus also includes a first delay line optically coupled to the network of optical devices and configured to send at least one output optical signal from a plurality of output optical signals of the network of optical devices to interact with at least one input optical signal in the plurality of input optical signals within the network of optical devices.

### Object of the Invention

The object of the invention is to provide a hardware-efficient optical processor and an apparatus comprising such an optical processor.

### Subject-matter of the Invention

This object is achieved by an optical processor of the type described in the introduction, wherein the at least one layer has a plurality of input ports and a plurality of output ports that are connected to the plurality of input ports via optical delay lines.

The main distinction between information (quantum as well as classical) stored in light vs. other hardware storages (semiconductor, ions, atoms, electrons) is that light is mobile and travels with the speed of light. The idea detailed below makes use of this property to implement hardware-efficient realizations of photonic processors by combining temporal and spatial multiplexing.

The use of spatial multiplexing is described e.g. in the article "Linear programmable nanophotonic processors.", Harris, Nicholas C., et al., Optica 5.12 (2018): 1623-1631. The use of temporal multiplexing is described e.g. in the article "Linear multiport photonic interferometers: Loss analysis of temporally-encoded architectures.", Qi, Haoyu, et al., arXiv preprint arXiv: 1812.07015 (2018) in the article "Quantum computational advantage via high-dimensional Gaussian boson sampling.", Deshpande, Abhinav, et al., Science advances 8.1 (2022), and in the article "Quantum computational advantage with a programmable photonic processor.", Madsen, Lars S., et al., Nature 606.7912 (2022).

In the article "Active temporal and spatial multiplexing of photons.", Mendoza, Gabriel J., et al., Optica 3.2 (2016): 127-132, the use of both space and time multiplexing is described, but in a separate manner (first space, then time, no optical feedback) and for a different purpose (massing multiplexing in time and space to handle nondeterministic sources and increase the success probability by multiplexing overhead).

The optical processor according to the invention combines temporal multiplexing and spatial multiplexing and can therefore achieve the same function using less hardware compared to traditional designs. For this purpose, the optical processor uses a hardware-efficient combination of temporal multiplexing via the optical delay lines and spatial multiplexing using the plurality of optical devices of the processor / interferometer structure. The temporal and spatial multiplexing solves the problem of having a significant hardware overhead of repeated structures in photonic processors.

By rerouting the optical signals or photons via the delay lines or delay loops from the optical outputs of the layer of optical devices to the optical inputs of the layer of optical devices, the number of optical devices required for processing the optical signals can be reduced. This is particularly suitable for universal interferometers, as detailed out below, but the same approach is also suitable for other optical chips with suitable repeated hardware structures. The optical processor or interferometer described herein may be on-chip, bulk, free-space or fiber-based.

In one embodiment, the optical processor is configured as a universal interferometer to perform unitary transformations on the plurality of input optical signals by processing the input optical signals in the plurality of optical devices. A universal (multiport) interferometer can be programmed to implement any linear transformation between multiple channels or optical modes. In particular, such a universal interferometer can be configured to perform unitary transformations on several optical channels, see e.g. the article "Experimental realization of any discrete unitary operator", M. Reck et al., Physical Review Letters 73.1 (1994): 58.

In an improvement of this embodiment, the universal interferometer is implemented in the Clements design. The Clements design of the universal interferometer is described in the article "Optimal design for universal multiport interferometers", W. R. Clements et al., Optica 3. 12 (2016): 1460-1465. The Clements design is more robust to optical losses than the Reck design and has an optical network structure that is more suitable for the time-space multiplexed optical processor described herein than the Reck design, as the latter has a triangular structure, while the Clements design has a matrix structure. The decomposition of the unitary matrix in the Clements design is therefore more like hardware decomposing, allowing to recycle the repeatable parts of the hardware.

In fact, this embodiment of the optical processor described herein is specially tailored for the universal interferometer in the Clements design: While making the hardware efficient, the universality of the interferometer is still kept. At the same time, the photonic processor described herein can be applied to non-universal interferometers with corresponding repetitive hardware structures, e.g. to cosine-sine interferometers, photonic neural networks, Coherent Ising Machine type optimization approaches, as well as to other optical processors having repetitive optical hardware structures.

In a further embodiment, the plurality of input ports of the layer includes a number N of input ports that is preferably equal to a number N of output ports of the layer, and wherein the plurality of optical devices of the layer includes a number N -1 of optical devices. Each of the optical devices typically comprises two input channels or input ports and two output channels or output ports. With a number N - 1 of optical devices, it is therefore possible to pairwise combine a number N of input optical signals that are received at the number N of input ports of the layer.

For implementation of the universal interferometer in the Clements design, a number of N - 1 optical devices, typically of variable optical beam splitters, is sufficient.

In a further embodiment, the optical network comprises a single layer of optical devices. In some implementations, e.g. when the optical processor implements the universal interferometer in the Clements design, an optical processor with a single layer of optical devices is sufficient. Based on the time-space multiplexing design, such an optical processor can perform a unitary transformation of the input optical signals.

In a further embodiment, at least part of the optical devices of the at least one layer, in particular all of the optical devices of the at least one layer, are configured as variable beam splitters. Variable beam splitters allow two optical signals or optical modes to interfere with each other.

In an improvement of this embodiment, the variable beam splitters comprise a reconfigurable Mach-Zehnder-Interferometer and a phase shifter. A reconfigurable Mach-Zehnder-Interferometer comprises two 50 : 50 beam splitters and a first phase shifter that is arranged between the two beam splitters and that determines the reflectivity of the channel. A reflectivity of 1 represents a bar state, which means that if light enters a variable beam splitter through the bottom input port, it will also exit the variable beam splitter via the bottom output port. On the other hand, a transmissivity of 1 represents a cross state, which means that if light enters a variable beam splitter through the bottom input port, it will exit the variable beam splitter via the top output port. An additional phase shifter that is arranged at one of the two input ports of the reconfigurable Mach-Zehnder-Interferometer allows to introduce an overall phase shift. Regarding the implementation of the variable beam splitter, reference is made to the above-referenced article by Clements et al., Optica 3. 12 (2016): 1460-1465, which is incorporated by reference into the present application in its entirety.

In a further embodiment, at least part of the optical devices are selected from the group comprising: photon sources (e.g. single photon, squeezed light), photon detectors (e.g. single-photon detectors, photon-number resolving detectors, homodyne detectors, photodiodes, in particular PIN photodiodes), and optical devices allowing to perform different optical transformations (e.g. loss, amplification, non-linear transformations), such as optical attenuators, optical amplifiers, non-linear optical devices, optical gates. The hardware structure which is repeatedly gone through by the delay loops or optical delay lines can include other optical operations than solely variable beam splitters.

In a further embodiment, the optical processor further comprises a control unit for controlling the optical devices of the at least one layer, wherein the control unit is configured to modify the processing of the optical devices of the at least one layer when the input optical signals pass from the output ports to the input ports of the at least one layer via the optical delay lines. When performing the time multiplexing, the processing of the optical devices of the at least one layer generally needs to be modified when the input optical signals pass through the optical delay lines, so that different transformations or a different processing can be performed with the optical devices each time the input optical signals pass through the plurality of optical devices.

In another embodiment, the optical delay lines connecting the input ports of the at least one layer to the output ports of the at least one layer have identical optical path lengths. In the optical processor described herein, the outputs from the optical delay lines do not interfere with further input optical signals, but only with the optical signals from the other optical delay lines. When the optical delay lines have equal optical path lengths, there is no need to synchronize the arriving time of the output states of the optical delay lines to the input states of the optical delay lines. This is advantageous, as such a synchronization is usually very challenging based on current technologies. The optical delay lines can be implemented in different implementations, e.g. on-chip waveguide structures or in optical fibers.

In a further embodiment, the optical processor further comprises a first plurality of optical switches, in particular a first plurality of variable beam splitters, configured to direct optical signals either received from the plurality of processor input ports or from the plurality of delay lines to the plurality of input ports of the at least one layer. For this purpose, the optical switches can be switched from a transmissive optical state to a reflective optical state and vice versa. The optical switches can be implemented as variable beam splitters. This is typically advantageous when the optical devices of the layer are also implemented as variable optical beam splitters, as only one type of optical device is needed in this case. However, it is not necessary that the optical switches are implemented as variable beam splitters.

In another embodiment, the optical processor further comprises: a second plurality of optical switches, in particular a second plurality of variable beam splitters, configured to direct optical signals received from the plurality of output ports of the layer either to the plurality of delay lines or to the plurality of processor output ports. For this purpose, the optical switches can be switched from a transmissive optical state to a reflective optical state and vice versa. The second plurality of optical switches may also be implemented as variable beam splitters, but this is not necessary.

A further aspect of the invention relates to an apparatus, comprising an optical processor as described above, a plurality of light sources for generating the plurality of input optical signals for the optical processor, and a plurality of optical detectors for detecting the output optical signals from the optical processor. The plurality of processor input ports may include a number N of processor input ports that coincides with the number N of processor output ports, but this is not mandatory, i.e. the number of processor input ports may be different from the number of processor output ports.

The light sources are generally implemented to generate input optical signals in the form of optical (laser) pulses or optical modes. The input optical signals may in particular be squeezed states (squeezed light) when the apparatus is used as a Gaussian boson sampling device. Gaussian boson sampling is described e.g. in the article "Gaussian boson sampling", Craig S. Hamilton et al., Physical review letters 119. 17 (2017): 170501, the entire content of which is incorporated by reference into the present application. The optical detectors are typically photon number resolving optical detectors. The optical detectors may also be threshold detectors.

Further advantages of the invention may be found in the description and the drawing. Likewise, the features mentioned above and those referred to below may be used independently, or several of them may be used in any desired combinations. The embodiments shown and described are not to be interpreted as an exhaustive list, but rather have an exemplary nature for description of the invention.

In the figures:
- Figure 1: shows a schematic representation of an apparatus including a universal interferometer having a spatial design with two layers each having three variable beam splitters,
- Figure 2: shows a schematic representation analogous to Figure 1 with a time-space-multiplexed design,
- Figure 3: shows a schematic representation of an implementation of a variable beam splitter,
- Figure 4: shows a schematic representation of a universal interferometer for nine input optical signals, and
- Figure 5: shows a schematic representation of a layer of an optical network of the universal interferometer of Figure 4 with nine optical delay lines connecting the output ports to the input ports of the layer.

In the following description of the drawings, identical reference signs are used for components which are the same or functionally equivalent.

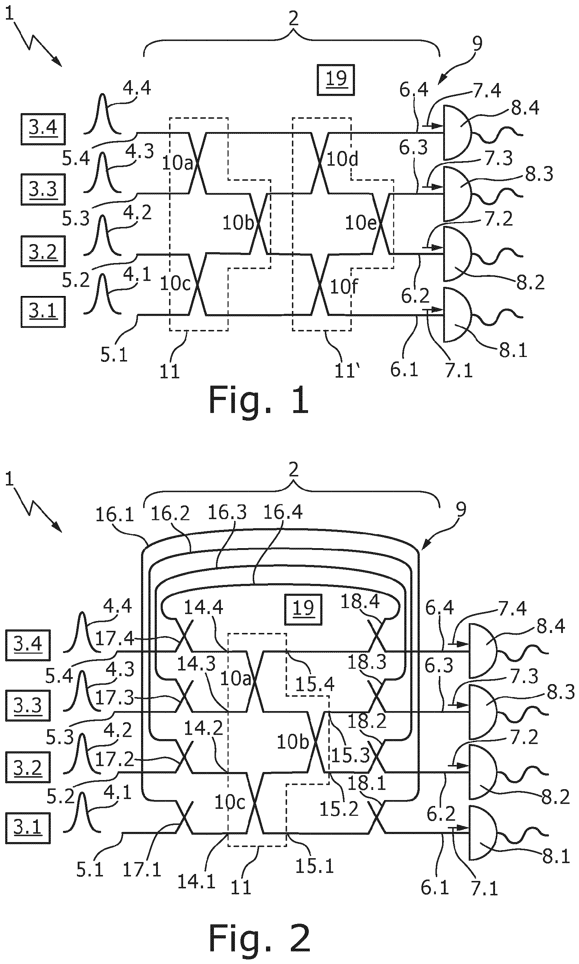

**Figure 1** shows an apparatus 1 that comprises an optical processor 2 in the form of a universal interferometer. In the example shown, the apparatus 1 is designed as a Gaussian boson sampling device for four optical modes. The apparatus 1 comprises a number of four laser sources 3.1 to 3.4 for generating four input optical signals 4.1 to 4.4 in the form of optical pulses, more specifically in the form of squeezed states.

The four input optical signals 4.1 to 4.4 are received by a corresponding number of processor input ports 5.1 to 5.4 of the optical processor 2. The optical processor 2 also comprises a number of four processor output ports 6.1 to 6.4 that emit four output optical signals 7.1 to 7.4. The apparatus 1 also comprises a number of four optical detectors 8.1 to 8.4 in the form of photonic number resolving detectors.

The optical processor 2 of Figure 1 is implemented via photonic integrated circuits. More specifically, the optical processor 2 comprises an optical network 9 of six optical devices 10a to 10f in the form of variable beam splitters. The optical network 9 is implemented in the Clements design with two layers 11, 11', each having three variable beam splitters 10a-c, 10d-f. The two layers 11, 11' are passed by the input optical signals 4.1 to 4.4 one after another and are processed by the variable beam splitters 10a-c, 10d-f of the respective layer 11, 11'. The processed input optical signals 4.1 to 4.4 leave the optical network 9 via the processor output ports 6.1 to 6.4 as optical output signals 7.1 to 7.4 to be detected by the optical detectors 8.1 to 8.4. An optical processor in the form of the universal interferometer, e.g. as shown in Figure 1, is a commonly used structure, e.g. for a central transformation in Boson Sampling or Gaussian Boson Sampling, but also for classical means.

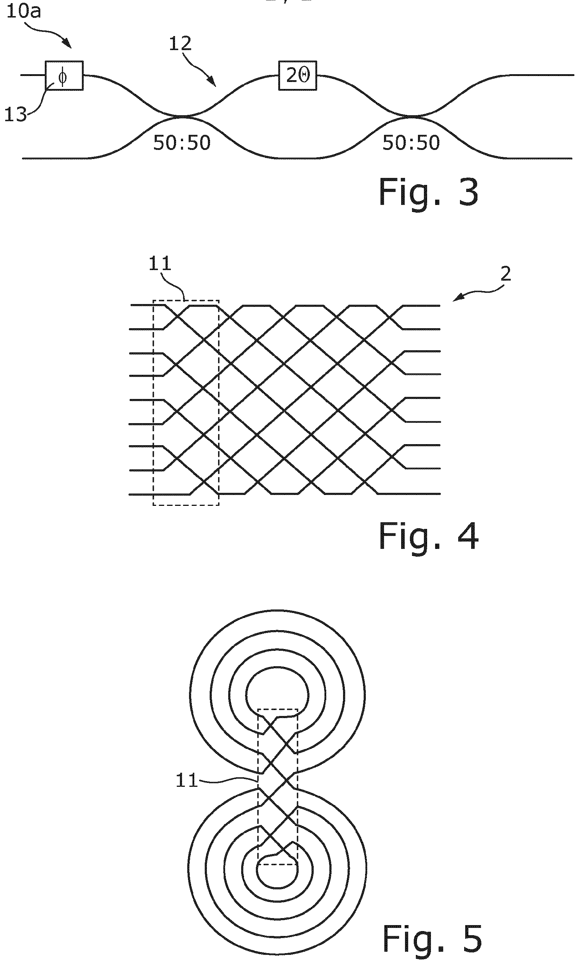

The processing by the optical processor 2 in the form of the universal interferometer allows to perform arbitrary unitary transformations on the input optical signals 4.1 to 4.4. In order to achieve this, the variable beam splitters 10a-f are implemented as shown in **Figure 3** for the first variable beam splitter 10a of the plurality of variable beam splitters 10a-f. The variable beam splitter 10a comprises a reconfigurable Mach-Zehnder-Interferometer 12 with two fixed 50 : 50 beam splitters and a phase shifter for generating a variable phase shift 2 θ that determines the reflectivity of the channel (being cos(θ), representing either a bar or a cross state). The variable beam splitter 10a also comprises an additional phase shifter 13 for generating a variable phase shift φ. The additional phase shifter 13 is arranged at one of the two input ports of the reconfigurable Mach-Zehnder-Interferometer 12. A control unit 19 that is configured as a suitable hardware and/or software is configured to program the variable beam splitters 10a-f, more precisely to change the phase shift θ, φ of each of the variable beam splitters 10a-d individually.

**Figure 2** shows an apparatus 1 with an optical processor 2 that is implemented in a time-space multiplexed design. In contrast to Figure 1, the optical processor 2 of Figure 2 comprises only a single layer 11 with three optical devices in the form of variable beam splitters 10a-c. The layer 11 comprises a number of four input ports 14.1 to 14.4 and a number of four output ports 15.1 to 15.4. The input ports of the first and third of the variable beam splitters 10a, 10c are optically connected to two of the input ports 14.3, 14.4; 14.1, 14.2 of the layer 11. The input ports of the second variable beam splitter 10b are connected to one output port of the first variable beam splitter 10a and to one output port of the third variable beam splitter 10c, respectively.

The four output ports 15.1 to 15.4 of the layer 11 are connected to the input ports 14.1 to 14.4 of the layer 11 via four optical delay lines 16.1 to 16.4. The control unit 14 controls the three optical devices of the layer 11 in the form of the variable beam splitters 10a-c. The control unit 14 is configured to modify the processing of the plurality of input optical signals 4.1 to 4.4 by the variable beam splitters 10a-c of the layer 11 when the input optical signals 4.1 to 4.4 pass from the output ports 15.1 to 15.4 to the input ports 14.1 to 14.4 of the layer 11 via the optical delay lines 16.1 to 16.4.

In this way, the optical processing that is performed in the optical processor 2 of Figure 1 by the three variable beam splitters 10d-f of the second layer 11' can be performed by the three variable beam splitters 10a-c of the single layer 11 of the optical processor of Figure 2. Thus, in the optical processor 2 of Figure 2, the input optical signals 4.1 to 4.4 pass through the same amount and equally configured variable beam splitters 10a-c, 10a-f as in Figure 1, implementing the same optical operation on the input optical signals 4.1 to 4.4.

For performing the temporal multiplexing, the optical delay lines 16.1 to 16.4 connecting the input ports 14.1 to 14.4 of the layer 11 to the output ports 15.1 to 15.4 of the layer 11 have identical optical path lengths (the length of the delay lines 16.1 to 16.4 in Figure 2 is not to scale). In this way, the need to synchronize the arrival times of the optical signals arriving at the input ports 14.1 to 14.4 after passing through the optical delay lines 16.1 to 16.4 can be omitted.

As can be gathered from Figure 2, the optical processor 2 also comprises a first plurality of optical switches in the form of variable beam splitters 17.1 to 17.4 that are configured to direct optical signals either received from the plurality of processor input ports 5.1 to 5.4 or from the plurality of delay lines 16.1 to 16.4 to the plurality of input ports 14.1 to 14.4 of the layer 11. The optical processor 2 further comprises a second plurality of optical switches in the form of variable beam splitters 18.1 to 18.4, configured to direct optical signals received from the plurality of output ports 15.1 to 15.4 of the layer 11 either to the plurality of delay lines 16.1 to 16.4 or to the plurality of processor output ports 6.1 to 6.4.

As an example for the implementation of a universal transformation, consider the following 4 x 4 unitary matrix that is to be mapped by the universal interferometer 2:
[ [0.1029177 -0.3020107j 0.18533898+0.51834215j 0.2307879 -0.35402922j - 0.62945739-0.14266046j]
[0.53754863+0.12536505j -0.27639598-0.31556624j 0.3721365 -0.02998933j - 0.28416637+0.5470035j]
[0.64430627-0.34655809j 0.54800094-0.19799131j - 0.11775581 +0.19514936j 0.16555973-0.21424662j]
[0.02206415-0.24042184j -0.18768883+0.38244139j -0.29801856+0.73569732j - 0.21078041+0.29279346j] ]

This unitary matrix can be mapped to the universal interferometer 2 of Figure 1 by setting the values for the phase shifts θ, φ of the six variable beam splitters 10a-f as indicated in the table below. In the table, numbers 10a-f in the columns relate to the reference numerals of the six variable beam splitters 10a-f.

**Table**

| | 10a | 10b | 10c | 10d | 10e | 10f |
|---|---|---|---|---|---|---|
| *ϕ* | 2.7769 | -1.8994 | -1.2160 | 3.0738 | -1.1362 | 0.9632 |
| *θ* | 0.5156 | 0.9301 | 0.9911 | 1.2953 | 1.2700 | 0.6571 |

In the following, an operating example for performing the above-described mapping with the Gaussian beam sampling apparatus 1 of Figure 2 will be given:
In a first step, the input optical signals 4.1 to 4.4 in the form of squeezed light with different squeezing levels are shot into the processor input ports 5.1 to 5.4 and they interfere in the universal interferometer 2, more precisely in the variable beam splitters 10a-c of the layer 11. For this purpose, the first plurality of variable beam splitters 17.1 to 17.4 is tuned to have a reflectivity of 1 (tuned to a bar state), so that all the input optical signals 4.1 to 4.4 pass to the input ports 14.1 to 14.4 of the layer 11. The parameters in the form of the phase shifts θ, φ of the three variable beam splitters 10a-c of the layer 11 are set to the values indicated in the columns with the numbers 10a-c the table above.

Each optical mode then reaches one of the second plurality of variable beam splitters 18.1 to 18.4 that allow the reflection rate to be tuned. The second plurality of variable beam splitters 18.1 to 18.4 is then tuned to a transmissivity of 1 so that the optical signals can pass into the optical delay lines 16.1 to 16.4 that are implemented as fiber loops in the present example.

In this step, i.e. when the optical signals or modes have left the layer 11 and have entered the optical delay lines 16.1 to 16.4, the control unit 19 modifies the parameters of the variable beam splitters 10a-c to the configurations of the three beam splitters 10d-f in the table shown above. The first plurality of variable beam splitters 17.1 to 17.4 is set to have transmissivity 1 (tuned to a cross state), so that the optical signals reach the input ports 14.1 to 14.4 of the layer 11. As the variable beam splitters 10a-c have changed their configuration, the optical signals are processed with the new parameter values of the phase shifts θ, φ corresponding to the values of the second layer 11' of the optical processor 2 shown in Figure 1.

In a subsequent step, the optical signals reach the second plurality of variable beam splitters 18.1 to 18.4 that are tuned to a reflectivity of 1 (tuned to a bar state) by the control unit 19, so that the optical signals will not enter the optical delay lines again, but pass through the processor output ports 18.1 to 18.4 and are detected by the photon number resolving detectors 8.1 to 8.4.

In the optical processor 2 shown in Figure 2, there is no additional input from the input ports 5.1 to 5.4 when the interference between the input optical signals 4.1 to 4.4 in the optical network 9 takes place, i.e. the input optical signals 4.1 to 4.4 interfere in the optical network 9 only among themselves.

For larger universal interferometers, i.e. for universal interferometers processing a larger number N of optical modes, the zig-zag beam splitter structure (of two beam splitter columns) of the layer 11 needs to be extended vertically, but not in the horizontal depth which stays 2. For N modes (where we assume N even for simplicity), it is necessary to implement N-1 variable beam splitters in space, plus the rerouting (N delay loops / lines and 2 N optical switches). Note, that here the hardware elements scale linearly with the system size N. This compares to N*(N-1)/2 required variable beam splitters for a spatial implementation, i.e. a quadratic scaling with the number of modes N.

**Figure 4** shows a universal interferometer 2 in a spatial implementation for a number of N = 9 optical modes in the Clements design. As can be gathered from Figure 4, a layer 11 having N - 1 = 8 variable beam splitters represented in the form of crosses is repeated four times in the universal interferometer 2. For a hardware-efficient implementation, the universal interferometer 2 of Figure 4 can be implemented in a time-space multiplexed design by adding time multiplexing via N = 9 delay lines or delay loops, as indicated in **Figure 5****.** As in Figure 2, the delay lines have the same optical length, i.e. the representation in Figure 5 is not to scale.

In a similar way as described above in connection with Figure 2, the layer 11 with the variable beam splitters is passed five times by the optical signals by passing them back from the output ports to the input ports of the layer 11 via the optical delay lines. It will be understood that the universal interferometer 2 of Figure 5 also requires 2 x N = 2 x 9 optical switches between the processor input ports and the input ports of the layer 11 and between the output ports of the layer 11 and the processor output ports, respectively. The optical switches are not represented in Figure 5 for the sake of simplicity. It should also be noted that the optical processor 2 of Figure 4 also comprises a final layer of four variable beam splitters that may be implemented as a separate layer or by the layer 11 with an appropriate setting of the parameters of the processing by the variable beam splitters.

It will be understood that the time-space multiplexing design of the optical processor 2 is not limited to optical devices in the form of variable beam splitters 10a-c, but may in principle also be applied to any other kind of optical element or optical device that can be repeatedly passed by optical signals from the optical delay lines or delay loops. These optical devices may e.g. be selected from the group comprising: photon sources, photon detectors, optical attenuators, optical amplifiers, non-linear optical devices, optical gates, etc. Moreover, the optical processor 2 may implement another type of interferometer, i.e. a non-universal interferometer, such as e.g. a cosine-sine interferometer.

## Claims

1. Optical processor (2), in particular optical interferometer, comprising:
a plurality of processor input ports (5.1 to 5.4) for receiving input optical signals (4.1 to 4.4),
a plurality of processor output ports (6.1 to 6.4) for emitting output optical signals (7.1 to 7.4),
an optical network (9) that connects the processor input ports (5.1 to 5.4) to the processor output ports (6.1 to 6.4) and comprises at least one layer (11) with a plurality of optical devices (10a-c) configured to process the input optical signals (4.1 to 4.4) from the processor input ports (5.1 to 5.4),
**characterized in that**
the at least one layer (11) has a plurality of input ports (14.1 to 14.4) and a plurality of output ports (15.1 to 15.4) that are connected to the plurality of input ports (14.1 to 14.4) via optical delay lines (16.1 to 16.4).

2. Optical processor according to claim 1, configured as a universal interferometer to perform unitary transformations on the plurality of input optical signals (4.1 to 4.4) by processing the input optical signals (4.1 to 4.4) in the plurality of optical devices (10a-c).

3. Optical processor according to claim 2, wherein the universal interferometer is implemented as a time-multiplexed version of the Clements design.

4. Optical processor according to any of the preceding claims, wherein the plurality of input ports (14.1 to 14.4) of the layer (11) includes a number N of input ports (14.1 to 14.4) that is preferably equal to a number N of output ports (15.1 to 15.4) of the layer (11), and wherein the plurality of optical devices (10a-c) of the layer (11) includes a number N -1 of optical devices (10a-c).

5. Optical processor according to any one of the preceding claims, wherein the optical network (9) comprises a single layer (11) of optical devices (10a-c).

6. Optical processor according to any of the preceding claims, wherein at least part of the optical devices of the at least one layer (11), in particular all the optical devices of the at least one layer (11), are configured as variable beam splitters (10a-c).

7. Optical processor according to claim 6, wherein the variable beam splitters (10a-c) comprise a reconfigurable Mach-Zehnder-Interferometer (12) and a phase shifter (13).

8. Optical processor according to any of the preceding claims, wherein at least part of the optical devices (10a-c) are selected from the group comprising: photon sources, photon detectors, optical attenuators, optical amplifiers, non-linear optical devices, optical gates.

9. Optical processor according to any of the preceding claims, further comprising: a control unit (19) for controlling the optical devices (10a-c) of the at least one layer (11), wherein the control unit (19) is configured to modify the processing of the plurality of input optical signals (4.1 to 4.4) by the optical devices (10a-c) of the at least one layer (11) when the input optical signals (4.1 to 4.4) pass from the output ports (15.1 to 15.4) to the input ports (14.1 to 14.4) of the at least one layer (11) via the optical delay lines (16.1 to 16.4).

10. Optical processor according to any of the preceding claims, wherein the optical delay lines (16.1 to 16.4) connecting the input ports (14.1 to 14.4) of the at least one layer (11) to the output ports (15.1 to 15.4) of the at least one layer (11) have identical optical path lengths.

11. Optical processor according to any of the preceding claims, further comprising: a first plurality of optical switches, in particular a first plurality of variable beam splitters (17.1 to 17.4), configured to direct optical signals either received from the plurality of processor input ports (5.1 to 5.4) or from the plurality of delay lines (16.1 to 16.4) to the plurality of input ports (14.1 to 14.4) of the at least one layer (11).

12. Optical processor according to any of the preceding claims, further comprising: a second plurality of optical switches, in particular a second plurality of variable beam splitters (18.1 to 18.4), configured to direct optical signals received from the plurality of output ports (15.1 to 15.4) of the layer (11) either to the plurality of delay lines (16.1 to 16.4) or to the plurality of processor output ports (6.1 to 6.4).

13. An apparatus (1), comprising:
an optical processor (2) according to any of the preceding claims,
a plurality of light sources (3.1 to 3.4) for generating the plurality of input optical signals (4.1 to 4.4) for the optical processor (2), and
a plurality of optical detectors (8.1 to 8.4) for detecting the output optical signals (7.1 to 7.4) from the optical processor (2).
